# EUROPÄISCHE PATENTANMELDUNG

(11) **EP 0 873 911 A2**
(43) Veröffentlichungstag der Anmeldung: **28.10.1998**
(21) Anmeldenummer: 98107251.5
(22) Anmeldetag: 21.04.1998
(51) Int. Cl.: B60R 9/06, B60R 9/10

(54) **Lastenträger für ein Fahrzeug, insbesondere für einen PKW**

(30) Priorität: 21.04.1997 DE 19716671
(71) Anmelder: Atera Eberhard Tittel GmbH, 88287 Grünkraut (DE)
(72) Erfinder: Wich, Andreas, 88250 Weingarten (DE); Hinderhofer, Jürgen, 88400 Biberach (DE)
(74) Vertreter: Schmidt-Evers, Jürgen, Dipl.-Ing.

(57) **Zusammenfassung**

Bei einem Lastenträger (1) für ein Fahrzeug, insbesondere einen PKW (6), mit einer Kupplungsvorrichtung (3) zum vorzugsweise heckseitigen, lösbaren Ankuppeln an das Fahrzeug, und einer an der Kupplungsvorrichtung (3) befestigten Tragbühne (2) für wenigstens einen Transportgegenstand, insbesondere für ein oder mehrere Fahrräder(8), wobei die Tragbühne (2) einen etwa horizontalen Träger (12) und eine darauf angeordnete Plattform (7) aufweist, ist die Plattform (7) durch ein haubenförmiges Formteil (13) gebildet mit einer Bodenwand (14) und einer an dessen Umfang angeformten und sich abwärts erstreckenden Umfangswand.

## Beschreibung

An einen Lastenträger der vorliegenden Art sind mehrere Forderungen gestellt. Er soll bei einer stabilen Ausgestaltung leicht sein, von einfacher und kostengünstig herstellbarer Bauweise sein, was sowohl führ die Einzelteile selbst als auch für deren Montage gilt, und er soll ein angenehmes Äußeres aufweisen.

Es ist bereits vorgeschlagen worden, die Plattform eines Heckträgers durch eine Metallplatte zu bilden.Hierdurch sind ein großer Materialaufwand und ein großes Gewicht vorgegeben, wodurch nicht nur die Leistungsfähigkeit beeiträchtigt wird sondern auch die Straßenlage des Fahrzeugs und dessen Fahrverhalten. Bei der bekannten Ausgestaltung bedarf es auch zusätzlicher Schutzverkleidungen für den Umfangsrand der Blechplatte, da diese ohne besonderen Schutz eine Gefahrensquelle für Verletzungen bei Unfällen darstellt. Zur Befestigung der Traglasten sind auf der Oberseite der Blechplatte besondere Befestigungsvorrichtungen auszubilden, wozu es eines beträchtlichen Aufwandes bedarf und zwar sowohl bei der Ausbildung dieser Vorrichtungen als auch bei der Handhabung eines Lastentransports.

Es ist zwecks Verringerung des Gewichts und zwecks Materialeinsparung bereits vorgeschlagen worden, eine Tragbühne durch einen Tragrahmen und darauf angeordneten Rinnen auszubilden, in die ein oder mehrere Fahrräder mit den Rädern einstellbar sind. Bei dieser Ausgestaltung ist nachteilig, daß die Tragbühne nach unten offen ist und deshalb die Tragbühne sowie deren Aufbauten zum Halten der Traglasten starken Verschmutzungen ausgesetzt sind. Dies gilt auch für auf der Tragbühne angeordnetes Transportgut, wie z.B. Fahrräder.

Der Erfindung liegt die Aufgabe zugrunde, einen Lastenträger der vorliegenden Art zu vereinfachen und kostengünstiger auszubilden.

Diese Aufgabe wird durch die Merkmale des Anspruchs 1 oder 3 gelöst.

Beiden erfindungsgemäßen Lösungen ist der Vorteil gemeinsam, daß die Plattform durch ein verhältnismäßig großflächiges Formteil gebildet ist, an dem wahlweise nach unten gerichtete Umfangswände und/oder Vertiefungen oder Erhöhungen in der Bodenwand einstückig angeformt sind, was sich in einfacher Weise und kostengünstig verwirklichen läßt. Außerdem wird hier aufgrund von Kastenbauweise die Stabilität und Festigkeit der Plattform und auch der Tragbühne verbessert. Die größere Festigkeit ermöglicht es, die Abdeckung mit geringerer Wandstärke zu fertigen, sodaß sowohl Material als auch Gewicht eingespart werden kann. Die vorgenannten Vertiefungen und/oder Erhöhungen können als Begrenzungsflächen zur Positionierung der Traglasten vorteilhaft ausgenutzt werden. Hierdurch wird die Fixierung der Traglasten auf der Tragbühne wesentlich vereinfacht und verbessert. Dabei kann die erfindungsgemäße Abdeckung mit einer geschlossenen Bodenwand ausgeführt werden. Hierdurch sind die Transportgegenstände, insbesondere Fahrräder, vor während der Fahrt durch das Fahrzeug aufgewirbelte Verschmutzungen, wie Spritzwasser, Steinschlag und dergl. weitgehend geschützt.

Es ist im weiteren vorteilhaft, die erfindungsgemäße Abdeckung als hutförmiges Bauteil in der horizontalen Erstreckung so groß zu bemessen, daß sie die es tragende Tragkonstruktion, z.B. Tragarme oder einen Tragrahmen, allseitig übergreift. Hierdurch ist nicht nur eine einfache Montage und Befestigung möglich, sondern auch eine sichere Befestigung, da in der horizontalen die Abdeckung bereits aufgrund ihrer Hutform formschlüssig auf der Tragkonstruktion positioniert werden kann, wobei die Umfangswand als horizontale Anschlagfläche dienen kann. Außerdem vermindern die abwärts gerichteten Seitenwände auch die Verletzungsgefahren, die von der Tragkonstruktion ausgehen, insbesondere von deren oberen Ecken, die von der erfindungsgemäßen hutförmigen Abdeckung überdeckt sind.

Die erfindungsgemäße Ausgestaltung zeichnet sich auch dahingehend als vorteilhafte Bauweise aus, daß die Tragkonstruktion durch das kappenförmige Formteil abgedeckt und von oben geschützt ist. Die Tragkonstruktion kann somit von einfacher Bauweise sein, ohne daß das Aussehen bzw. Erscheinungsbild beeinträchtigt wird.

Ein weiteres vorteilhaftes Weiterbildungsmerkmal der Erfindung besteht darin, das Formteil als Tiefziehteil oder Spritzgießteil insbesondere aus Kunststoff zu fertigen. Hierdurch lassen sich auch schwierige Formen in einfacher Weise kostengünstig herstellen.

Weitere Weiterbildungsmerkmale dienen der Positionierung der Traglasten auf der Abdeckung und einer vorteilhaften Formgebung für das erfindungsgemäße Formteil.

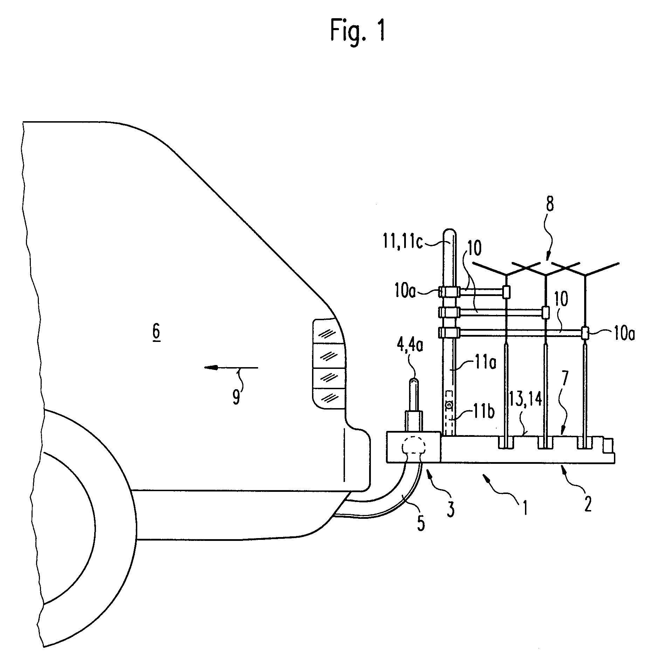

Nachfolgend werden die Erfindung und weitere durch sie erzielbare Vorteile anhand von bevorzugten Ausführungsbeispielen näher erläutert. Es zeigt
- Fig. 1: einen erfindungsgemäße Lastenträger für den vorzugsweise heckseitigen Anschluß an ein Fahrzeug, insbesondere an einen PKW, in der Seitenansicht;
- Fig. 2: den Lastenträger in der Draufsicht;
- Fig. 3: den Schnitt III-III in Fig. 2;
- Fig. 4: den Lastenträger in der Vordersicht;
- Fig. 5: den Lastenträger in der Rückansicht.

Die Haupteile des allgemein mit 1 bezeichneten Lastenträgers sind eine Tragbühne 2 und eine an deren Vorderseite befestigte Kupplungsvorrichtung 3 mit einer Bestätigungsvorrichtung 4 mit einem in einer quer angeordneten Vertikalebene schwenkbar gelagerten Betätigungshebel 4a zum Schließen und Öffnen der Kupplungsvorrichtung 3, um den Lastenträger 1 an eine Kugelkopf-Ahängerkupplung 5 des PKW 6 lösbar anzukuppeln. Bei der vorliegenden Ausgestaltung ist die Tragbühne 2 im Sinne einer Plattform 7 ausgebildet, auf der zu transportierende Lasten, z.B. ein oder mehrere Fahrräder, hier drei Fahrräder 8, stehen die auf der Tragbühne 2 quer und bezüglich der Fahrtrichtung 9 hintereinander angeordnet werden können. Zur Befestigung des oder der Fahrräder 8 kann eine vorzugsweise vorne und mittig auf der Tragbühne 2 angeordnete Befestigungsstange 11 vorgesehen sein, an der die Fahrräder 8 jeweils mittels Distanzstangen 10 befestigbar sind, die an ihren Enden jeweils Befestigungklauen 10a zu ihrer Befestigung an der Befestigungsstange 11 oder am Rahmen des Fahrrads 8 aufweisen.

Bei der Kupplungsvorrichtung 3 kann es sich um eine solche handeln, die auf eine andere Weise mit dem Fahrzeug verbunden ist, z.B. mitteils einer besonderen Tragvorrichtung, sodaß es einer Kugelkopf-Anhängerkupplung nicht bedarf, um den Lastenträger 1 zu transportieren.

Die wesentlichen Teile der Tragbühne 2, die mit der Kupplungsvorrichtung 3 eine wahlweise montierbare und demontierbare Baueinheit bildet, sind eine Tragkonstruktion in Form eines horizontalen Trägers 12 und eine Traghaube 13, die mit ihrer Oberseite die Plattform 7 bildet.

Der Träger 12 weist zwei von einer gemeinsamen Tragarmbasis 12a U-förmig ausgehende Tragarmschenkel 12b auf, auf denen die Traghaube 13 so aufgesetzt ist, daß sie mit ihrer Bodenwand 14 auf dem Träger 12 aufliegt und ihre sich von der Bodenwand 14 abwärts erstreckende Umfangswand mit Seitenwänden 15a, einer Vorderwand 15b und einer Rückwand 15c den Träger 12 übergreifen und abdecken. Bei der vorliegenden Ausgestaltung weist der Träger 12 -in der Draufsicht gesehen- die Form eines nach hinten offenen Omega auf, mit dem sich quer erstreckenden Basisarm 12a, den sich von diesem nach hinten erstreckenden Tragarmschenkeln 12b und von diesen sich nach außen erstreckenden Tragarmschenkeln 12c. In den Eckenbereichen zwischen den Tragarmabschnitten ist der Träger gerundet geformt. Er kann durch ein entsprechend gebogenes Rohr runder oder viereckiger Querschnittsform gebildet sein. Die Tragbühne 2 ist bezüglich der sich in Fahrtrichtung 9 erstreckenden vertikalen Längsmittelebene 16 spiegelsymmetrisch ausgebildet.

Der Abstand a der Tragarmschenkel 12b voneineinander beträgt etwa ein drittel der Querabmessung b der Tragbühne 2. Die Traghaube 13 ist durch im einzelnen nicht dargestellte Schrauben 17 mit dem Träger 12 verbunden, die vorzugsweise von oben Löcher 18 in der Bodenwand 14 und im Träger 12 durchfassen, hier vier Schrauben 17 im Bereich der Tragarmschenkel 12b.

Zur Befestigung der Tragbühne 12 an der Rückseite der Kupplungsvorrichtung 3 kann ebenfalls durch Schrauben lösbar oder unlösbar erfolgen. Hierzu können andeutungsweise dargestellte Schrauben 19 dienen, die den Träger 12, hier den Basisarm 12a, die Vorderwand 15b und die Rückwand des Gehäuses der Kupplungsvorrichtung 3 durchfassen, das vorzugsweise eine quaderförmige Bauform hat. Diese Verschraubung kann mittels zwischen dem Träger 12 und der Kupplungsvorrichtung 3 angeordneten Distanzstücken so ausgebildet sein, daß die Vorderwand 15b mit die Distanzstücke übergreifenden, nach unten ausmündenden Schlitzen (nicht dargestellt) im verschraubten Zustand von oben aufsetzbar und wieder entfernbar ist.

Die Befestigungsstange 11 ist unlösbar oder lösbar mit dem Träger 12 verbunden, hier mit der Tragarmbasis 12a, wobei in der Bodenwand 14 ein Loch vorgesehen ist, daß die Befestigungsstange 11 mit Bewegungsspiel durchfaßt. Bei der vorliegenden Ausgestaltung weist die Befestigungsstange 11 die Form eines auf dem Kopf stehenden U auf, wobei für die Befestigungsstangenschenkel 11a jeweils ein Loch 23 in der Bodenwand 14 vorgesehen ist.

Es ist vorteilhaft, die Befestigungsstange 11 mit wenigstens einem Befestigungsfuß 11b am Träger 12 zu befestigen, der die Bodenwand 14 in einem Loch 23 nach oben durchsetzt und mit dem der Oberteil 11c der Befestigungstange 11 lösbar verbindbar ist. Diese Ausgestaltung ermöglicht es nicht nur, den oberen Teil 11c der Befestigungsstange zu entfernen, wenn er nicht gebraucht wird. Der wenigstens eine Befestigungsfuß 11b kann durch ein im Querschnitt entsprechend kleiner oder größer als die Befestigungsstange 11 bemessenes Rohrstück gebildet sein, das auf dem Träger 12 befestigt ist, und in das oder auf das das Oberteil 11c mit geringem Bewegungsspiel steckbar und durch eine die Muffenverbindung quer in Löchern durchfassende oder das jeweils äußere til in einem Gewindeloch durchfassede und gegen das innere Teil klemmend wirksame Befestigungsschraube fixierbar ist. Dabei ist es vorteilhaft mehrere übereinander angeordnete Löcher in entsprechender Position vorzusehen, sodaß das Oberteil 11c in wahlweise einstellbaren Höhenstellungen einstellbar und somit höhenverstellbar ist. Zur Stabilisierung des Gewindeeingriffs kann an das äußere Rohr eine Gewindemutter außen befestigt, insbesondere angeschweißt, sein, in die die Befestigungsschraube einschraubbar ist.

Zur Positionierung des wenigstens einen Transportgegenstandes, hier drei Fahrräder 8, können in der Bodenwand 14 durch Erhöhungen oder vorzugsweise durch Vertiefungen gebildete Ausformungen vorgesehen sein, die der horizontalen Positionierung der Transportgegenstände dienen. Bei der vorliegenden Ausgestaltung sind quer verlaufende Rinnen 24 vorgesehen, in die das wenigstens eine Fahrrad 8 mit seinen Rädern einstellbar ist. Die Querschnittsform der Rinnen 24 ist halbkreisförmig oder dreieckförmig gerundet. Der sich längs der Fahrtrichtung 9 erstreckende Abstand der Rinnen 24 voneinander ist an den Positionierungsabstand der Fahrräder 8 während des Transports angepaßt. Bei der vorliegenden Ausgestaltung sind drei jeweils zu beiden Seiten der Längsmittelebene 16 angeordnete Rinnenpaare vorgesehen.

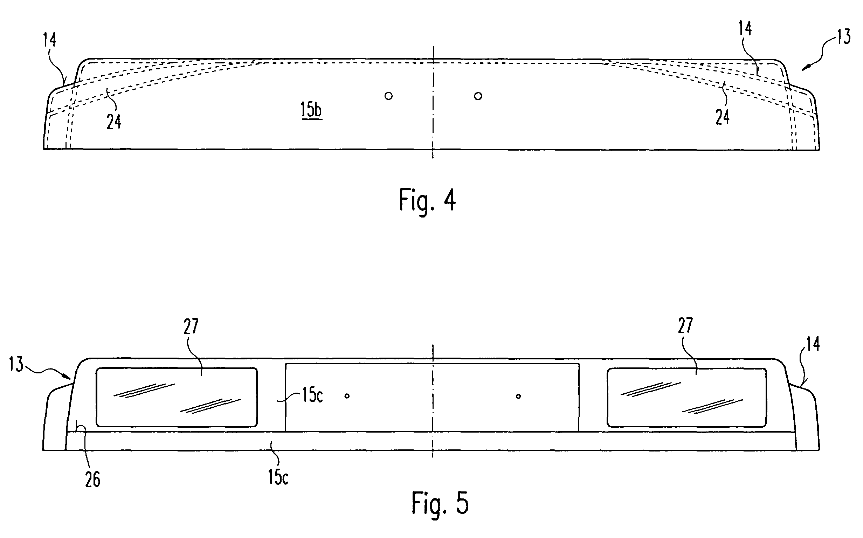

Wie insbesondere aus Fig. 4 zu entnehmen ist, sind die Rinnen 24 seitlich offen. Außerdem ist zumindest der Rinnengrund seitlich nach außen geneigt. Diese Ausgestaltung ermöglicht nicht nur ein leichtes Einführen des Fahrrads 8 von der Seite her, sondern es kann auch sich in der Rinne ansammelndes Wasser abfließen. Hierdurch ist eine Selbstreinigung, z.B. auch durch Regenwasser möglich. Die jeweils durch zwei Rinnenteile 24a gebildeten Rinnenpaare laufen außenseitig von den Tragarmen 12b in der Bodenwand 14 nach innen aus, sodaß die Anlage der Tragarme 12b an der in diesem Bereich ebenen Bodenwand 14 gewährleistet ist. Zwischen den Tragarmen 12b kann die Bodenwand 14 zu ihrer Stabilisierung weitere Ein- oder Ausformungen 25 aufweisen. Wie ebenfalls aus Fig. 4 zu entnehmen ist, sind zumindest die seitlichen Bereiche der Bodenwand 14 seitlich nach außen geneigt oder gerundet ausgebildet. Diese Formgebung dient ebenfalls der vorgenannten Selbstreinigung der Bodenwand 14.

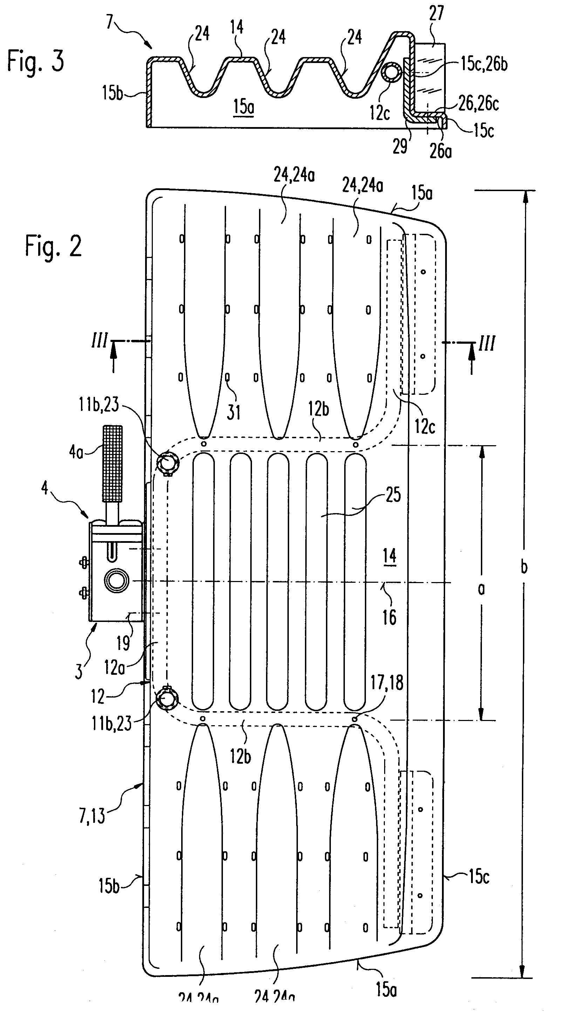

Wie insbesondere aus den Fig. 2 und 3 zu entnehmen ist, ist die Rückseite der Traghaube 13 bzw. deren Rückwand 15c mit einer vorzugsweise oberseitig offenen Stufe 26 ausgebildet. Der Stufenfreiraum ist so groß gewählt, daß zwei Rückstrahler 27 darin angeordnet werden können. Hierdurch sind die Rückstrahler 27 durch die Stufenbasis 26a gegen seitliche und rückseitige Stöße geschützt angeordnet. Die Befestigung der Rückstrahler 27 kann direkt an der vertikalen Stufenwand 26b erfolgen, wobei vorzugsweise jeweils ein die Stufenwände 26b, 26c hinter- und untergreifende Stützwinkel 29 vorgesehen sein können, die durch sie und die Stufenwände 26b, 26c durchfassende Schrauben mit den Rückstrahlern 27 verschraubt sind, wie es insbesondere Fig. 3 zeigt.

Die sich in der Querrichtung erstreckende Abmessung b der Tragbühne 2 ist kleiner bemessen als die Breite des Fahrzeugs 6. Die sich in der Fartrtrichtung 9 erstreckende Längsabmessung ist an die Größe oder Anzahl der Transportgegenstände 8 angepaßt. Wie insbesondere aus Fig. 2 zu entnehmen ist, ist die Querabmessung nach hinten rund oder schräg konvergent ausgebildet. Hierdurch erhält die Tragbühne 2 nicht nur eine ansprechende Form, sondern sie ermöglicht auch ein leichteres rangieren des Fahrzeugs. Wie außerdem aus Fig. 2 zu entnehmen ist, sind die Ecken der Traghaube 13 in der Draufsicht gesehen gerundet.

Die Traghaube 13 ist ein einstückiges Bauteil, das durch Formen einstückig hergestellt ist, z.B. durch Tiefziehen oder Spritzgießen. Dabei kann die Traghaube 13 aus Metall, insbesondere Blech oder aus Kunststoff bestehen. Der zuletzt genannte Werkstoff ist insbesondere wegen seiner Korrisionsbeständigkeit vorteilhaft.

Im Bereich der Rinnen 24 können Befestigungsriemen an der Bodenwand 14 befestigt sein, die ein Anschnallen der Räder der Fahrräder 8 während des Transportes ermöglichen. Bei der vorliegenden Ausgestaltung sind an einer oder an beiden Seiten der Rinnen 24 Löcher oder Schlitze 31 für die Riemen vorgesehen, die ein Umschnallen der Felgen ermöglichen. Dabei ist es vorteilhaft, die Schlitze 31 in zwei oder mehr in der Fahrtrichtung 9 verlaufenden Reihen anzuordnen, sodaß die Riemen an unterschiedliche Radabstände oder Fahrradgrößen anpaßbar sind.

## Patentansprüche

1. Lastenträger (1) für ein Fahrzeug, insbesondere einen PKW (6), mit
- einer Kupplungsvorrichtung (3) zum vorzugsweise heckseitigen, lösbaren Ankuppeln an das Fahrzeug,
- und einer an der Kupplungsvorrichtung (3) befestigten Tragbühne (2) für wenigstens einen Transportgegenstand, insbesondere für ein oder mehrere Fahrräder (8),
- wobei die Tragbühne (2) einen etwa horizontalen Träger (12) und eine darauf angeordnete Plattform (7) aufweist,
- und wobei die Plattform (7) durch ein haubenförmiges Formteil (13) gebildet ist mit einer Bodenwand (14) und einer an dessen Umfang angeformten und sich abwärts erstreckenden Umfangswand.

2. Lastenträger nach Anspruch 1,
**dadurch gekennzeichnet,**
daß in der Bodenwand (14) eine oder mehrere Vertiefungen (24) zur Aufnahme wenigstens eines Transportgegenstandes eingeformt sind.

3. Lastenträger (1) für ein Fahrzeug, insbesondere einen PKW (6), mit
- einer Kupplungsvorrichtung (3) zum vorzugsweise heckseitigen, lösbaren Ankuppeln an das Fahrzeug,
- und einer an der Kupplungsvorrichtung (3) befestigten Tragbühne (2) für wenigstens einen Transportgegenstand, insbesondere für einen oder mehrere Fahrräder (8),
- wobei die Tragbühne (2) einen etwa horizontalen Träger (12) und eine darauf angeordnete Plattform (7) aufweist,
- und wobei die Plattform (7) durch ein Formteil (13) mit einer Bodenwand (14) und wenigstens einer darin eingeformten Vertiefung (24) zur Aufnahme wenigstens eines Transportgegenstandes gebildet ist.

4. Lastenträger nach Anspruch 3,
**dadurch gekennzeichnet,**
daß am Umfang des Bodenteils (14) eine sich abwärts erstreckende Umfangswand angeformt ist.

5. Lastenträger nach einem der vorherigen Ansprüche,
**dadurch gekennzeichnet,**
daß das Formteil -in der Draufsicht gesehen- eine im wesentlichen viereckige Form aufweist und die Umfangswand zwei einander gegenüberliegende Seitenwände (15a), eine Vorderwand (15b) und Rückwand (15c) bildet.

6. Lastenträger nach einem der vorherigen Ansprüche 2 bis 5,
**dadurch gekennzeichnet,**
daß die Vertiefungen durch Rinnen (24) gebildet sind, die vorzugsweise quer zur Fahrtrichtung (9) verlaufen.

7. Lastenträger nach einem der vorherigen Ansprüche,
**dadurch gekennzeichnet,**
daß die Vertiefungen oder Rinnen (24) seitlich aus der Bodenwand (14) ausmünden.

8. Lastenträger nach Anspruch 7,
**dadurch gekennzeichnet,**
daß der Grund der Vertiefungen oder Rinnen (24) sich zur Ausmündung hin geneigt erstreckt.

9. Lastenträger nach einem der vorherigen Ansprüche,
**dadurch gekennzeichnet,**
daß die Oberseite der Bodenwand (14) konvex geformt ist oder nur die Seitenbereiche der Bodenwand (14) sich seitlich geneigt erstrecken.

10. Lastenträger nach einem der vorherigen Ansprüche,
**dadurch gekennzeichnet,**
daß an der Rückwand (15c) zwei Rückstrahler (27) in einer Ausnehmung (28) angeordnet sind, die vorzugsweise durch eine horizontale Stufe (26) gebildet ist.

11. Lastenträger nach einem der vorherigen Ansprüche,
**dadurch gekennzeichnet,**
daß das Formteil durch Tiefziehen oder Spritzgießen hergestellt ist.

12. Lastenträger nach einem der vorherigen Ansprüche,
**dadurch gekennzeichnet,**
daß das Formteil aus Kunststoff oder Metallblech besteht.

13. Lastenträger nach einem der vorherigen Ansprüche,
**dadurch gekennzeichnet,**
daß das Formteil eine im wesentlichen gleich dicke Wandung aufweist.

14. Lastenträger nach einem der vorherigen Ansprüche,
**dadurch gekennzeichnet,**
daß die Bodenwand (14) eine im wesentlichen geschlossene Wand ist.

15. Lastenträger nach einer der vorherigen Ansprüche,
**dadurch gekennzeichnet,**
daß der Träger (12) einen mittleren oder zwei zu beiden Seiten der Längsmitte angeordnete Tragarme (12b) aufweist, deren Abstand voneinander kleiner ist, als die Querabmessung (b) der Tragbühne (2), vorzugsweise ein Drittel der Querabmessung (b) beträgt.

16. Lastenträger nach Anspruch 15,
**dadurch gekennzeichnet,**
daß der Träger (12) eine -in der Draufsicht gesehen- U- oder Omega-förmige Form aufweist.

17. Lastenträger nach einem der Ansprüche 6 bis 16,
**dadurch gekennzeichnet,**
daß zu beiden Seiten der vertikalen Langsmittelebene (16) angeordnete Rinnen (24) ein in einer Querebene angeordnetes Rinnenpaar bilden, die vorzugsweise außenseitig von den Tragarmen (12b) angeordnet sind.

18. Lastenträger nach einem der vorherigen Ansprüche,
**dadurch gekennzeichnet,**
daß im vorderen Bereich der Tragbühne (2) wenigstens eine aufrechte Befestigungsstange (11) für die Transportgegenstände angeordnet ist, die die Bodenwand (14) des Formteils in wenigstens einem Loch (23) durchsetzt.

19. Lastenträger nach Anspruch 18,
**dadurch gekennzeichnet,**
daß die Befestigungsstange (11) aus einem die Bodenwand (14) durchsetzenden Befestigungsfuß (11b) und einem damit lösbar verbundenen Befestigungsoberteil (11c) besteht, die lösbar miteinander verbunden sind.
